# EUROPEAN PATENT APPLICATION

(11) **EP 4 733 900 A1**
(43) Date of publication of application: **29.04.2026**
(21) Application number: 24306817.8
(22) Date of filing: 28.10.2024
(51) Int. Cl.: G06F 3/01, G06T 15/50, G06T 19/00

(54) **LIGHTING IN REAL SCENE REPRESENTATION FOR EXTENDED REALITY APPLICATIONS**

(71) Applicant: InterDigital CE Patent Holdings, SAS, 75017 Paris (FR)
(72) Inventor: JOUET, Pierrick, 35000 RENNES (FR); HIRTZLIN, Patrice, 35830 BETTON (FR); LELIEVRE, Sylvain, 35760 MONTGERMONT (FR); FAIVRE D'ARCIER, Etienne, 35750 SAINT GONLAY (FR); FONTAINE, Loic, 35530 NOYAL SUR VILAINE (FR)
(74) Representative: Vossius & Partner Patentanwälte Rechtsanwälte mbB

(57) **Abstract**

An extended reality system is proposed comprising a presentation engine and a scene understanding module configured to manage representation of the real part of the scene including real light in a generic way. The presentation engine initializes the scene understanding module with the scene description that comprises data describing parameters to integrate the real scene including real light and the virtual part of the extended reality scene. The scene understanding module manages a scene understanding representation thanks to data obtained from sensors or databases and warns the presentation engine of updates of the scene understanding representation. A generic API is defined for interactions between the two modules.

## Description

### 1. Technical Field

The present principles generally relate to the domain of managing the real part of an extended reality (XR) scene. Scene descriptions are central for XR applications and the relationship with the real environment, essential. In particular, the present principles relate to methods and devices for managing a representation of a real scene including lights, in real time, for generic renderer and/or XR application.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In the domain of extended Reality (XR) application, the knowledge of the real world and its lighting condition may be required for different purposes. For example, the localization of the XR rendering device or for a seamless insertion of virtual content into the user's real environment including the lighting or relighting of virtual content and the correct positioning of shadows. The knowledge of real lighting condition includes the extraction of different characteristics of one or more light sources, including their pose in a given XR space. These parameters can be used to instantiate a virtual light (i.e., a virtual representation of a real light) with the same properties, to get a good consistency between real and virtual scene. This virtual light is set at the same place than the real one. Such knowledge about the real world can include the location of trackables items to correctly place virtual content according to the user(s). The 3D representation of the surrounding environment (point cloud, mesh, semantics, lights) may be used to ensure proper interactions between virtual and real content (occlusion, collision, physics, shadows). This knowledge of the real word (also called scene understanding) may be acquired in real time by an XR User equipment (UE), for example through an XR runtime module that collects user environment data through sensors and process them to build a real-world representation (e.g. a 3D scene graph). Some open standards specify an Application Programming Interfaces (API) for XR runtime module to provide high-performance access to XR functionalities. The UE can delegate the scene understanding processing to an edge server and sends a representation of it to this server, for example, pose information and images and/or video of the user environment. The real-world representation may be captured offline and/or stored into a world storage library from where scanned representations of real places including light representations are available for download.

However, each solution is specific to an engine or to an XR application. There is a lack for a solution to manage representation of the real part of the 3D scene including lights in a generic way.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

An extended reality system is proposed comprising a presentation engine and a scene understanding module configured to manage representation of the real part of the scene including real light in a generic way. The presentation engine initializes the scene understanding module with the scene description that comprises data describing parameters to integrate the real scene including real light and the virtual part of the extended reality scene. The scene understanding module manages a scene understanding representation thanks to data obtained from sensors or databases and warns the presentation engine of updates of the scene understanding representation. A generic API is defined for interactions between the two modules.

The present principles relate to a method for managing a scene understanding representation of a real environment of a user of an extended reality scene, wherein the real environment includes real lights. The method comprises obtaining a scene description, the scene description comprising first data describing a virtual part of the extended reality scene including virtual lights and second data describing parameters to integrate the real environment to the first data. A scene understanding representation is initialized with the second data. At least one change of the real lights is detected in the real environment and the virtual lights of the first data are updated according to the at least one change of the real lights. Then, the first data are updated according to the updates of the virtual lights. In an embodiment, the updating of the virtual lights of the first data is performed by a scene understanding module and wherein the relighting is performed by a presentation engine. In an embodiment, the second data comprise an information to enable the detecting at least one change of the real lights of the real environment, and, if enabled, the second data further comprise options for light extraction, parameters to evaluate each option of light extraction, and a timing information for light extraction. Each option of light extraction belongs to a group of options comprising pointlight, spotlight, directional light, area light and environment light.

The present principles also relate to a scene understanding module comprising a circuit configured to implement the method above.

The present principles also relate to an extended reality scene presentation engine comprising a circuit configured for obtaining a scene description, the scene description comprising first data describing a virtual part of the extended reality scene including virtual lights and second data describing parameters to integrate the real environment to the first data. The second data are sent to a scene understanding module for initializing and updating a scene understanding representation of the extended reality scene including virtual lights. Then, the first data are relighted according to at least one update of the scene understanding representation received from the scene understanding module. Each virtual light of the first data has a type belonging to a group of light types comprising point light, spotlight, directional light, area light and environment light.

Both circuits may belong a common device.

### 4. Brief Description of Drawings

The present disclosure will be better understood, and other specific features and advantages will emerge upon reading the following description, the description making reference to the annexed drawings wherein:
- **Figure 1** illustrates a generic module to manage a representation of the real part of an XR scene according to the present principles;
- **Figure 2** depicts an instantiation of the generic module of Figure 1 as a scene understanding module that maintains a representation of the user environment according to the present principles;
- **Figure 3** shows an example architecture of a device which may be configured to implement methods according to embodiments of the present principles;
- **Figure 4** depicts a first example of a sequence diagram illustrating the present principles;
- **Figure 5** depicts a third example of a sequence diagram illustrating the present principles;
- **Figure 6** depicts a second example of a sequence diagram illustrating the present principles.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

In extended Reality (XR) applications, a presentation engine and scene manager module (PE module) use an XR runtime module (through an API like, for instance, OpenXR) or a world analysis module to seamlessly integrate a virtual scene into the real world. The scene understanding process is performed by the XR runtime and/or the World Analysis modules. The virtual scene may come from a scene description file (e.g. a glTF scene description file) and the PE maintains a scene representation (PE Scene) according to its own internal structure. The world knowledge may be captured and analyzed in real time (by the XR runtime and the world analysis modules) or from already captured real world including lights representations, stored in a world storage module. In some architectures, a world analysis module uses a world API to request world objects related to the UE location from a world asset data base. It also uses the XR Runtime API (e.g. an OpenXR API) to request sensor's data (UE environment data like camera images, position data from IMU (Inertial Measurement Unit) ...). These data are used to build in real-time a new representation of the real scene or to update the world object obtained from the world asset data base. The Presentation Engine can request representation of real objects using the XR Runtime or the World Analysis API. It can request pose information (e.g. the position of the UE or the trackables in the user environment) or user actions information (user input, gesture notification...) using the XR Runtime API (e.g. an OpenXR API). The PE uses this information to place the virtual objects at the correct location and to render the part of the virtual scene that is seen by the user. The API mentioned above may be proprietary or from open standards. For illustration purpose, open standards like OpenXR^{™} are cited as examples that provide functionalities related to scene understanding. For instance, extensions to the OpenXR API (e.g. XR_MSFT_scene_understanding and XR_FB_scene_capture ) propose methods to configure and start scan processes and to request the representation of real objects.

As an example, and for illustration purpose, The XR_MSFT_scene_understanding OpenXR extension provides applications with a structured, high-level representation of the planes, meshes, and objects in the user's environment, enabling the development of spatially aware applications. The application requests computation of a scene, receiving the list of scene components observed in the environment around the user. In such an application, first an XrSceneObserverMSFT handle is created to manage the system resource of the scene understanding compute. Then, the application starts the scene computing by calling xrComputeNewSceneMSFT with XrSceneBoundsMSFT to specify the scan range and a list of XrSceneComputeFeatureMSFT features. The completion of computation is checked by polling xrGetSceneComputeStateMSFT. Once computing is completed, an XrSceneMSFT handle is created to the result by calling xrCreateSceneMSFT. Properties of scene components are obtained by using xrGetSceneComponentsMSFT, and, scene components are located by using xrLocateSceneComponentsMSFT. An application can also pass parameters to specify how the scan of the user environment should be computed. In an embodiment, the application can pass one or more bounding volumes that are used to determine which scene components to include in the resulting scene: Scene components entirely outside these volumes should be culled. The space parameter provides a reference coordinate system in which the coordinates of the bounding volumes and the scanned objects will be expressed. The time parameter gives a time at which the bounds volume will be evaluated within space.

In this example extension, an application can request that the system begin capturing information about what is in the environment around the user. The XrSceneCaptureRequestInfoFB structure is used by an application to instruct the system what to look for during a scene capture. If the request parameter is NULL, then the runtime must conduct a default scene capture. The request parameter is a string that the application can use to specify what type of scene capture has to be initiated by the runtime. The content of buffer pointed to by the request parameter is runtime-specific.

Other frameworks like ARCore and ARKit provide solution to estimate light parameters. In the literature, solutions are also proposed to extract the real lights in the user's environment. The extraction of real lights relies on the scan of the real environment.

Thanks to the XR Runtime module, an XR UE can request the scan of the real environment and the extraction of real lights. APIs exist for a presentation engine module to configure and request representation of the user environment (not for light), but the configuration data used with this API is specific to an engine or to an XR application. There is a lack for a generic solution. A content creator may want to insert in the description of its 3D virtual scene, some indications on how the scan and the light extraction should be performed, what elements of the 3D scene are needed (walls, floor, horizontal or vertical plane, type and number of lights), what quality is needed for the scan object and for lights (simplified mesh, bounding boxes, textures, light types, light parameters, etc....), in which spatial extent the real world must be analyzed and/or when should be performed update of the scan and the light extraction (once, timed or event based...), for example.

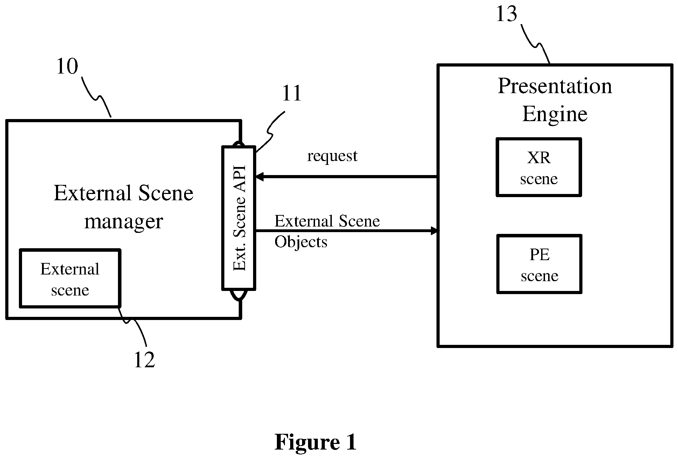

**Figure 1** illustrates a generic module 10 to manage a representation of the real part of an XR scene according to the present principles. This module and associated API 11 handle an external scene graph 12 that is synchronized with the virtual scene managed by a presentation engine 13. According to the present principles, semantics is provided to include information related to scene understanding in a virtual scene description file and to describe the representation of a real scene. Generic API 11 exposes to presentation engine 13 a set of functions that comprises initializing and configuring the external scene manager module (that is creation of a session between the two modules, setting of parameters needed by the external module to handle its scene); starting or stopping the external module processing; notifying the external module that an update occurred in the scene managed by the presentation engine; and registering callbacks for the external module to request status from the PE module or to notify that updates occurred in the external scene.

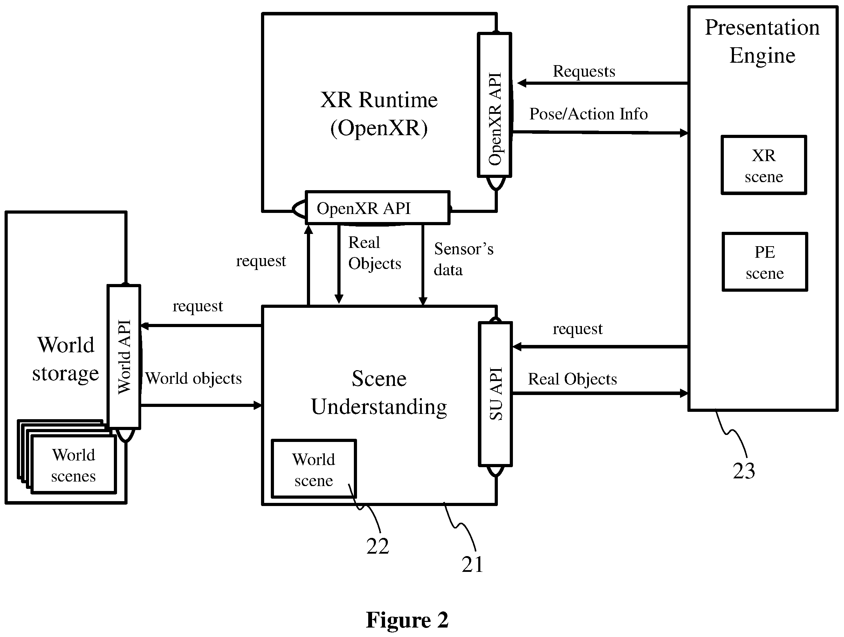

**Figure 2** depicts an instantiation 21 of generic module 10 of Figure 1 as a scene understanding module that maintains a representation 22 of the user environment according to the present principles. In this example embodiment, this module is the unique entry point for a presentation engine module 23 to get the knowledge of the real scene around the user and to integrate a virtual scene into this real scene. Scene understanding (SU) module 21 creates and maintains a representation 22 of the real environment (for example, scene graph of the real-world scene) around the user. It gets updates of this scene graph by scanning in real-time the user environment (using the XR Runtime API) or by retrieving pre-scanned data from a world storage module. Presentation engine (PE) 23 may control the configuration and the starting of scene graph 22 creation and update. A generic API is proposed herein that provides methods for the PE. The scan including light extraction of the user environment is linked to anchors and/or trackables that allow a link between a virtual scene and a place in the real environment where to integrate the virtual scene or elements of the virtual scene. Those anchors and trackables may be described in a virtual scene description file (e.g. glTF MPEG_anchor extension). The PE can request the detection and the tracking of the trackables to the XR Runtime module. The detection and the tracking of a trackable results to the definition of an XR space in which the poses of one or more anchors are expressed. Another XR space is defined for each anchor, where the pose of virtual elements can be expressed. Both PE and SU modules may have access to the list of existing XR spaces and use them to spatially synchronize their scene graph. The Id of a trackable XR space (xrSpaceId) is given as input to the API methods to handle a scan of real objects and extraction of real light around each trackable. Each xrSpaceId gives a mapping between a trackable described in the XR scene and a set of elements of the world scene. Each object of the world scene, returned by the SU module, comprises a set of attributes including a referenceId to identify it in the world scene as a unique object and a xrSpaceId to identify the XR space in which it is located. It may also comprise visual attributes like pose, mesh, material and texture description, lighting attributes for an object representing a real light source, physical attributes to handle interaction with other real or virtual objects (occlusion, collision...). Additional parameters may include semantics information to specify the nature of the object (e.g. "wall", "table", "chair", "light", "sound", ...).

The following table provides a possible API according to the present principles:

| **Method** | **Description** | |
|---|---|---|
| init () | Initialization of the SU module and creation of a session between the PE and the SU module. | |
| configure () | Configures the way the real scene must be scanned and how real light must be extracted. For each trackable XR space, a set of input parameters is provided: | |
| | [ | |
| | { | |
| | xrSpaceId | |
| | scanUUID (to retrieve an existing scan) | |
| | lightUUID (to retrieve an existing representation of light sources) | |
| | scanOccurence | |
| | array of object semantics | |
| | array of compute options (scan details, mesh types, light type, light parameters...) | |
| | array of scan volumes (sphere, box...): determine the volumes where scanned objects must be provided. Real scan objects that intersect one or more of the bounding volumes should be used, and all other objects ignored. All the lights illuminating the scanned volumes will be extracted. | |
| | } | |
| | ] | |
| | Scan volumes may overlap between 2 xrSpaceId. In that case, real object contained in the overlap section may be provided twice, with two different referenceId, or only once for one of the xrSpaceId. | |
| start () | Starts or stops the creation and update of the real scenes including real lights. The input parameter is a set of xrSpaceId to specify the trackables around which the scan of real objects and the extraction of real lights must be performed. | |
| stop () | | |
| | [ | |
| | { | |
| | xrSpaceId | |
| | } | |
| | ] | |
| registerCallbacks () | Provides callback functions to the scene understanding module to allow it to send updates or status of the world scene. An array of callbacks is given as input. | |
| | [ | |
| | { | |
| | type (goal of the callback, e.g. an enumeration with the following possible values: UPDATES, STATUS...), | |
| | callback () (a pointer to a function) | |
| | } | |
| | ] | |
| | The parameters of an UPDATES callback are an array of objects that include: | |
| | | • An operation, ADD, UPDATE or REMOVE |
| | | • A timestamp value |
| | | • For ADD, the referenceId and xrSpaceId of the new object as well as a dictionary of attributes and their initialization values. |
| | | • For UPDATE, the referenceId and xrSpaceId of the object as well as a dictionary of attributes and their new values. |
| | | • For REMOVE, the referenceId of the object to remove. |
| | The SU module may automatically call this UPDATE callback at the same occurrence of the scan and the light extraction process or it may call it when significative changes has occurred. | |
| | The parameters of a STATUS callback are an array of objects that include: | |
| | | • xrSpaceId |
| | | • ReferenceId (if absent, all the scene related to xrSpaceId is considered) |
| | | • status (the status of the object referenced by ReferenceId, e.g. ONGOING, COMPLETE, NOT VALID, PARTIAL...) |
| | The SU module may send this STATUS callback multiple time after a scan process and light extraction have been started, each time this status changes. | |
| getSceneComponents () | Requests element(s) of the world scene. The following set of optional input parameters give filtering criteria for this request: | |
| | { | |
| | ***time*:** requests the world scene at a given historical time or predicted time. This parameter may be used with an XR device able to store past versions of the world scene or able to predict it in the future. A time limit in both directions may be specified, depending on the capacity of the XR UE (e.g. a few second in the past and a few tens of ms in the future). | |
| | xrSpaceId: request elements related to a given XR space. | |
| | Array of **scan volumes:** request elements contained in one of the specified volumes. | |
| | Array of ***object semantics:*** request elements with one of the given semantics. | |
| | Array of object ***referenceIds*:** request elements with one of the given ids. | |
| | } | |
| | Returns a status of the world scene (same possible values as in the STATUS callback) and if OK (status = COMPLETE), returns the graph of the world scene or of some word scene elements, each returned element comes with a set of attributes: | |
| | | • referenceId |
| | | • visual, lighting, and physical attributes |
| | | • semantic attributes |

In the configure () method, the scanOccurence parameter is a value specifying when the scan of real objects and extraction of real lights must be updated after a first call to the start () function. In a variant, the scan process and extraction of real lights may start automatically after a call to the configure () method. An extra "autostart" parameters may be added to this method to explicitly specify this automatic starting mode. scanUUID allows to retrieve an existing scan in the world storage library. lightUUID allows to retrieve a representation of light sources in the world storage library. the scanOccurence parameter may have different values: ONCE: the scan and lights extraction are performed only once, for instance in case of a static real scene; N_FRAME: the scan and lights extraction are performed periodically, every N rendering frames, N depending on the dynamism of the real scene; AUTO: the scan occurrence and light extraction occurrence are managed by the SU module. The SU module may perform a light pre-analysis to detect significant changes in the real world and start a new scan and / or a new light extraction from the beginning. This pre-analysis may be performed from raw images data, like RGB images from a camera or depth images from a depth sensor. Several of these possible values may be combined to address different scenarios (e.g. ONCE AND AUTO). An object semantics may be any label representing a type of object: "wall", "floor", "table", "chair", "light", "sound", "freespace" ... Compute options and scan volumes may be similar to the one specified in the Microsoft OpenXR scene understanding extension, for example.

According to the present principles, semantics are defined in a scene description file. This semantics specifies if and how the user real environment should be integrated into the scene. Semantics already exist in scene description languages, e.g. MPEG-SD MPEG_anchor extension that specify an element of the real world where virtual elements should be positioned. The semantics proposed according to the present principles may be added as new parameters in *MPEG_anchor* extension, or a new *MPEG_node_real* (or any other name) extension may be specified, beside the *MPEG_anchor* extension. These extensions are related to the glTF format, but these semantics may be added in extensions of any other description format (USD, FBX...). In the following tables, the value in the column **Usage** indicates if the parameter is optional (O) or mandatory (M) according to the present principles.

| **Parameter name** | | | **Type** | **Usage** | **Description** |
|---|---|---|---|---|---|
| useScan | | | Boolean | O | If true, the scan of the real word is needed for the integration of the virtual objects: |
| | | | | | • As simplified meshes to be used for physics simulation (collision, occlusion...) |
| | | | | | As full mesh/texture to handle relighting or for a digital twin of an object that is not present in the real scene. |
| useLight | | | Boolean | O | If true, the extraction of real light from use environment is needed for the integration of the virtual objects. |
| If(useScan) | | | | | |
| | scanUUID | | String | | To retrieve an existing scan in the world storage library. |
| | | scanOptions | Array | O | Array of options (enumeration) for the scan computation: possible values can be the one specified in the Microsoft OpenXR scene understanding extension. |
| | | scanDetails | Object | | Specifies the required level of detail for the mesh (number/type of primitives/m3) and for the texture of the visual mesh. |
| | scanOccurence | | Enum | | Specifies when the scan of real objects must be updated. It may have the same format as the scanOccurence parameter. |
| | | realSemantic | Array | O | Semantic descriptions of nodes that are needed ("table", "room", "chair", "wall", "light", "freespace" ...) |
| If(useLight ∥ useScan) | | | | | |
| | | scanVolumes | Array | O | Array of bounding volumes that determine the spaces where scanned objects must be used. Real scan objects that intersect one or more of the bounding volumes should be used, and all other objects ignored. All the lights illuminating the scanned volumes will be extracted. |
| | | | | | |
| If (useLight) | | | | | |
| lightUUID | | | | | To retrieve an existing representation of light sources in the world storage library. |
| | nbLights | | number | O | Maximum number of lights to extract |
| | criteria | | Enum | | Criteria use for extraction {INTENSITY,TYPE, COLOR... } |
| | lightOption | | Array | | Array of options (enumeration) for light extraction. |
| | | lightDetails | Array of Object | | For each type of light, lightDetails specifies the parameters to evaluate. |
| | lightExtraction Occurence | | Enum | | Specifies when the extraction of real light must be updated. It may have the same format as the scanOccurence parameter. |

Possible values for a scanOptions item may be:

| **Enumeration value** | **Description** |
|---|---|
| PLANE | Request plane data for scanned objects |
| PLANAR_MESH | Request planar meshes for scanned objects |
| VISUAL_MESH | Request 3D visualization meshes for scanned objects |
| COLLIDER_MESH | Request 3D collider meshes for scanned objects |
| FREE_VOLUME | Request to get the available space around a trackable |
| POINT_CLOUD | Request a points cloud representation |
| BOUNDING_BOX | Request a simplified collider mesh |
| TEXTURED_MESH | Request mesh with a texture |

Possible values for a lightOptions item may be:

| **Enumeration value** | **Description** |
|---|---|
| PointLight | Request Point Light for extracted lights |
| SpotLight | Request Spot Light for extracted lights |
| DirectionalLight | Request Directional Light for extracted lights |
| AreaLight | Request Area Light for extracted lights |
| EnvLight | Request Environment Light for extracted lights |

Semantics of a scanDetail object may be:

| **Parameter name** | **Type** | **Usage** | **Description** | |
|---|---|---|---|---|
| primitivesNumber | number | O | Gives the quantity of geometric primitives per m³ | |
| primitiveType | Enum | O | Gives the types of primitives | |
| TextureOptions | Array | O | Array of options (e.g. enumeration) for the texturing details. Possible values may be: | |
| | | | | • LOW_RES, HIGH_RES for the resolution of the texture, or the exact resolution (e.g. 1024x768) |
| | | | | • LOW_LIGHT, HIGH_LIGHT for the level of lightning of the texture |
| | | | | • RGB, RGBA...for the texture format. |

Possible values for a primitiveType may be:

| **Enumeration value** | **Description** |
|---|---|
| QUAD | Mesh of 3D Model is represented by an array of Quad |
| TRIANGLE | Mesh of 3D Model is represented by an array of TRIANGLE |
| POINT CLOUD | 3D Model is represented by a point cloud |
| GAUSSIAN_SPLAT | 3D Model is represented by an array of gaussian |

Semantics of a lightDetail object may be:

| **Name** | | **Type** | **Description** |
|---|---|---|---|
| type | | Enum | See Table 1 |
| If (type == PointLight){ | | | |
| | pose | String or Boolean | If (pose == True) then pose of the light is requested |
| | color | String or Boolean | If (color == True) then color value (RGB) is requested |
| | temperature | String or Boolean | If (temperature == True) then temperature value is requested |
| | intensity | String or Boolean | If (intensity ==True) then intensity value is requested |
| | range | String or Boolean | If (range == True) then range value is requested |
| } | | | |
| If (type == SpotLight){ | | | |
| | pose | String or Boolean | If (pose == True) then pose of the light is requested |
| | color | String or Boolean | If (color == True) then color value (RGB) is requested |
| | temperature | String or Boolean | If (temperature == True) then temperature value is requested |
| | intensity | String or Boolean | If (intensity ==True) then intensity value is requested |
| | innerConeAngle | String or Boolean | If (innerConeAngle ==True) then innerConeAngle value is requested |
| | outerConeAngle | String or Boolean | If (outerConeAngle ==True) then innerConeAngle value is requested |
| } | | | |
| If (type == DirectionalLight){ | | | |
| | direction | String or Boolean | If (direction == True) then direction of the light is requested |
| | color | String or Boolean | If (color == True) then color value (RGB) is requested |
| | temperature | String or Boolean | If (temperature == True) then temperature value is requested |
| | intensity | String or Boolean | If (intensity ==True) then intensity value is requested |
| } | | | |
| If (type == AreaLight){ | | | |
| | pose | String or Boolean | If (pose == True) then pose of the light is requested |
| | color | String or Boolean | If (color == True) then color value (RGB) is requested |
| | temperature | String or Boolean | If (temperature == True) then temperature value is requested |
| | intensity | String or Boolean | If (intensity ==True) then intensity value is requested |
| | texture | String or Boolean | If (texture ==True) then texture associated with the light is requested |
| | format | String or Boolean | If (format ==True) then format value is requested |
| | shapeType | String or Boolean | If (shapeType == True) then shapeType is requested |
| } | | | |
| If (type == EnvLight){ | | | |
| | imageProjectionType | String or Boolean | If (imageProjectionType == True) then imageProjectionType is requested |
| | rotation | String or Boolean | If (rotation == True) then rotation of the IBL environment is requested |
| | intensity | String or Boolean | If (intensity ==True) then brightness multiplier for environment is requested |
| | sphericalHarmonic | String or Boolean | If (sphericalHarmonic ==True) Spherical harmonic coefficients for irradiance up to l=2 is requested |
| | textures | String or Boolean | If (textures ==True) then textures associated with the light are requested |
| | format | String or Boolean | If (format ==True) then format value of the texture is requested |
| | size | String or Boolean | If (size ==True) then size value of the texture is requested |
| } | | | |

The scanOccurence parameter is a value specifying when the scan of real objects must be updated. It may have the same format as the one in the configure () method of the API. Semantics for a scanVolumes object may be defined as follows. 3D coordinates are expressed in the XR space related to trackable associated to the anchor. All the lights illuminating the scanned volumes are extracted, this implies that the light sources can be outside the volume.

| **Parameter name** | | | **Type** | **Usage** | **Description** |
|---|---|---|---|---|---|
| | type | | Enum | M | SPHERE, BOX, FRUSTUM |
| | If (type == SPHERE) | | | | |
| | | Center | array | M | 3D coordinate of the center of the sphere |
| | | Radius | number | M | Radius of the sphere in meters. |
| | If (type == BOX) | | | | |
| | | pose | matrix | M | 4*4 matrix representing the center position and orientation of the box |
| | | extents | array | O | Edge-to-edge length of the box along each dimension. |
| | If (type == FRUSTUM) | | | | |
| | | pose | matrix | M | 4*4 matrix representing the position and orientation of the tip of the frustum |
| | | fov | Vec4 | M | Angles of the four sides of the frustum |
| | | far | number | M | Positive distance of the far plane or the frustum |
| | | near | number | M | Positive distance of the near plane or the frustum |

According to the present principles, a scene description format is proposed for the scan of the real scene including lights provided by the "scene understanding" module. This format is related to the real-world objects returned by the getSceneComponents () method and the UPDATE callbacks of the API. It may be the description of the full space around the user, or it can be an update, with only the differences from a previous provision. The format defined hereafter is an example based on the Khronos glTF language, extended with MPEG-SD extensions, but similar features can be adapted to other languages, for instance the one used for the internal representation of the scene (PE scene). The scan of one or more real objects may come as a scene graph, for example glTF scene graph. Each root node of this graph is associated/mapped with a virtual node of the glTF scene of the PE module that features an MPEG_anchor extension, i.e. the one who shares the same XR space. The transform matrix of a "real" node should be expressed in the trackable XR space (xrSpaceId). A "real" node may have a mesh and a texture generated and provided by the SU module. Extra parameters may be added to a "real" node inside a new MPEG_node_real extension (or any other name).

| **Parameter name** | **Type** | **Usage** | **Description** |
|---|---|---|---|
| referenceId | String | | Unique id of a real node, set by the SU module |
| xrSpaceId | String | O | XR space in which transform information are expressed. Only needed for a root node of the scene graph. |
| realSemantic | String | O | Semantic description of the node ("table", "room", "chair" ...) |
| scanType | enum | M | Indicates the kind of mesh associated to the node: |
| | | | • FULL: a complete mesh, material and texture is provided |
| | | | • BOUNDING: a simplified mesh is provided that can be used for physics simulation (collision, occlusion...). |

According to the present principles, a format is proposed for the description of lights provided by the "scene understanding" module. This format is related to the light objects returned by the getSceneComponents () method and the UPDATE callbacks of the API. It may be the description of all extracted lights, or it can be an update, with only the differences from a previous provision. The pose of a "real" light should be expressed in the reference space (xrSpaceId).
getSceneComponents() method returns a set of lights. The format depends on the type of the light.

| **Name** | | | **Type** | **Description** | |
|---|---|---|---|---|---|
| If (type == PointLight){ | | | | | |
| | pose | | Quaternion | Rotation of the light. | |
| | | | Vec3f | Position of the light | |
| | color | | Vec3f | Color value (RGB value) | |
| | temperature | | float | Temperature value | |
| | Intensity | | float | Intensity value | |
| | range | | float | Range value | |
| } | | | | | |
| If (type == SpotLight){ | | | | | |
| | pose | | Quaternion | Rotation of the light. | |
| | | | Vec3f | Position of the light | |
| | color | | Vec3f | Color (RGB value) | |
| | temperature | | float | Temperature value | |
| | Intensity | | float | Intensity value | |
| | innerConeAngle | | float | Angle in radians | |
| | outerConeAngle | | float | Angle in radians | |
| } | | | | | |
| If (type == DirectionalLight){ | | | | | |
| | direction | | Vec3f | Direction of the light | |
| | color | | Vec3f | Color (RGB value) | |
| | temperature | | float | Temperature value | |
| | Intensity | | float | Intensity value | |
| } | | | | | |
| If (type == AreaLight){ | | | | | |
| | pose | | Quaternion | Rotation of the light. | |
| | | | Vec3f | Position of the light | |
| | color | | Vec3f | Color (RGB value) | |
| | temperature | | float | Temperature value | |
| | Intensity | | float | Intensity value | |
| | Texture / Image | | Texture | texture associated with the light ( image or video) | |
| | Format | | Enum | These may be: IMAGE or VIDEO. | |
| | Shape type | | Enum | These may be: RECT, DISK, or SPHERE. | |
| | If(Shape type == RECT) { | | | | |
| | | width | float | Width of the light | |
| | | height | float | Height of the light | |
| | } | | | | |
| | If (Shape type == DISK){ | | | | |
| | | radius | float | Radius | |
| | } | | | | |
| | If (Shape type == SPHERE) { | | | | |
| | radius | float | Radius | | |
| | } | | | | |
| | If (type == EnvLight){ | | | | |
| | ImageProjectionType | Enum | These may be CUBEMAP or EQUIRECTANGULAR | | |
| | rotation | Vec4f | Rotation of the IBL environment(quaternion) | | |
| | intensity | float | Brightness multiplier for environment. | | |
| | Spherical Harmonic | Array (27 floats) | Spherical harmonic coefficients for irradiance up to l=2. This is a 9x3 array | | |
| | Textures/ Images | Array of Textures | If ImageProjectionType is CUBEMAP then Textures/Images is an array of 6 images/ video, one for each cube face. | | |
| | | | The array of 6 images/video can grouped in one image / video (thumbnail). | | |
| | | | If ImageProjectionType is EQUIRECTANGULAR then Textures/Images is a equirectangular image/video | | |
| | Size | Vec2f | Size of the image | | |
| } | | | | | |
| referenceId | | String | Unique id of a real light, set by the SU module | | |
| xrSpaceId | | String | XR space in which pose are expressed. | | |

The representation of one or more real lights may come as an element of a scene graph, for example glTF scene graph or USD. In an implementation of this format, PointLight, SpotLight and DirectionalLight can be expressed using KHR_Ligh_Punctuals extension of Khronos glTF format. In another implementation of this format, EnvLight can be expressed using MPEG_lights_texture_based extension of MPEG_SD standard (Khronos glTF language, extended with MPEG-SD extensions) or using EXT_lights_image_based extension of Khronos glTF format. In another implementation of this format, PointLight, SpotLight, DirectionalLight, AreaLight can be expressed using USDLux format (Pixar USD).

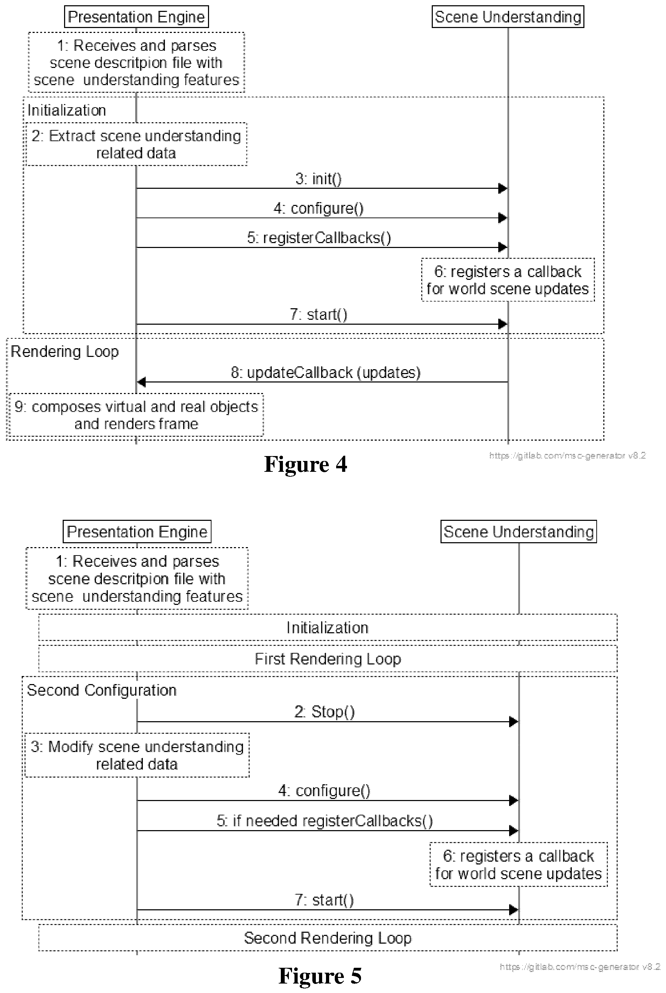

**Figure 4** depicts a first example of a sequence diagram illustrating the present principles. It shows the exchanges between the PE module and the SU module during a 3D scene processing, involving real world elements. In this example, the SU module automatically sends World Scene updates using the registered callback.

The PE starts an XR application and receives an initial scene description file (step 1), describing the virtual elements to integrate in the real world. During an initialization phase, the PE parses the scene description file and retrieves the information related to the scene understanding processing (step 2). If the scan of real-world elements is needed to process the scene it uses the SU API to initialize and configure the SU module (steps 3, 4 and 5). The SU module registers the PE callbacks (step 6) that will be used to send real-world updates to the PE. The PE starts the scene understanding processing (step 7), but if the autostart parameter is set to True in the configure () method. During the rendering loop (i.e. the processing phase where the PE, at a given rate, process the 3D scene and create visual/audio frame to be presented to the user). If the PE receives real scene updates from the SU module (step 8), it parses the update data following the format proposed according to the present principles, and extracts real objects representations. If no update is sent by the SU module, the PE uses real objects representations previously received. The PE composes a mixed scene, made of real and virtual objects, and renders new frames (step 9).

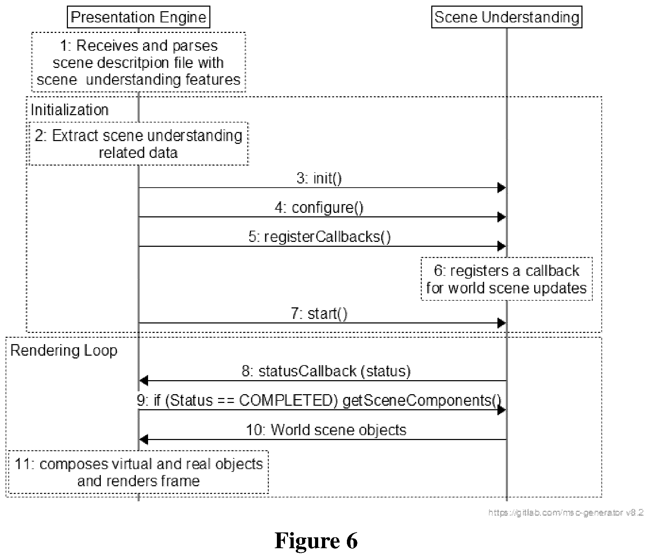

**Figure 6** depicts a second example of a sequence diagram illustrating the present principles. In this second example, no UPDATE callback is registered but only a STATUS callback. The PE uses the returned value of this STATUS callback to wait for available scan and retrieve real objects representations using the getSceneComponents() method.

**Figure 5** depicts a third example of a sequence diagram illustrating the present principles. In this third example, at some point after the configure and the start of the scan have been launched, the XR application decide to change the scan processing. In that case, the PE module may use the stop() method and may redo the configuration and the starting processes with other parameters.

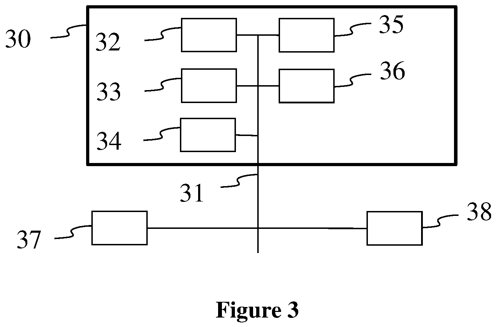

**Figure 3** shows an example architecture of a device 30 which may be configured to implement methods according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of managing a representation of the real environment of a user of an XR application, and belongs to a set comprising:
- a mobile device;
- a communication device;
- a game device;
- a tablet (or tablet computer);
- a laptop;
- a still picture camera;
- a video camera.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for managing a scene understanding representation of a real environment of a user of an extended reality scene, wherein the real environment includes real lights, the method comprising:
- obtaining a scene description, the scene description comprising first data describing a virtual part of the extended reality scene including virtual lights and second data describing parameters to integrate the real environment to the first data;
- initializing a scene understanding representation with the second data;
- detecting at least one change of the real lights and updating the virtual lights of the first data according to the at least one change of the real lights; and
- relighting the first data according to the updates of the virtual lights.

2. The method of claim 1, wherein the updating of the virtual lights of the first data is performed by a scene understanding module and wherein the relighting is performed by a presentation engine.

3. The method of claim 1 or 2, wherein the second data comprise an information to enable the detecting at least one change of the real lights of the real environment, and, if enabled, the second data further comprise options for light extraction, parameters to evaluate each option of light extraction, and a timing information for light extraction.

4. The method of claim 3, wherein each option of light extraction belongs to a group of options comprising point light, spotlight, directional light, area light and environment light.

5. An extended reality scene presentation engine comprising a circuit configured for:
- obtaining a scene description, the scene description comprising first data describing a virtual part of an extended reality scene including virtual lights and second data describing parameters to integrate a real environment to the first data;
- sending the second data to a scene understanding module for initializing and updating a scene understanding representation of the extended reality scene including virtual lights; and
- relighting the first data according to at least one update of the scene understanding representation received from the scene understanding module.

6. The extended reality scene presentation engine of claim 5, wherein each virtual light of the first data has a type belonging to a group of light types comprising point light, spotlight, directional light, area light and environment light.

7. A scene understanding module comprising a circuit configured for:
- obtaining a scene description, the scene description comprising first data describing a virtual part of an extended reality scene including virtual lights and second data describing parameters to integrate a real environment including real lights to the first data;
- initializing a scene understanding representation with the second data;
- detecting at least one change of the real lights and updating the virtual lights of the first data according to the at least one change of the real lights; and
- relighting the first data according to the updates of the virtual lights.

8. The scene understanding module of claim 7, wherein the relighting is performed by a presentation engine.

9. The scene understanding module of claim 8, wherein the second data are received from the presentation engine.

10. The scene understanding module of one of claims 7 to 9, wherein the second data comprise an information to enable the detecting at least one change of the real lights of the real environment, and, if enabled, the second data further comprise options for light extraction, parameters to evaluate each option of light extraction, and a timing information for light extraction.

11. The scene understanding module of claim 10, wherein each option of light extraction belongs to a group of options comprising point light, spotlight, directional light, area light and environment light.
